# EUROPEAN PATENT APPLICATION

(11) **EP 1 898 555 A1**
(43) Date of publication of application: **12.03.2008**
(21) Application number: 06123473.8
(22) Date of filing: 03.11.2006
(51) Int. Cl.: H04L 12/26

(54) **A test device comprising a programmable sequencer for testing a link initialization behavior of a dut**

(30) Priority: 06.09.2006 US 824669 P
(71) Applicant: Agilent Technologies, Inc., Santa Clara, CA 95051 (US)
(72) Inventor: Zelleroehr, Markus, 70771 Leinfelden-Echterdingen (DE); Gupta, Rupali, 122001, Gurgaon/Haryana (IN)
(74) Representative: Barth, Daniel Mathias

(57) **Abstract**

The invention relates to a test device (1) for testing a link initialization behavior of a device under test -DUT- (2), comprising a sequencer (11) for performing initialization steps in response to response signals (51) received from the DUT (2), whereby the sequencer (11) comprises a programmable memory (112) for mapping an input value represented by plurality of address bits (i₁,..., iₙ) to an output value represented by a plurality of output bits (a₁,..., aₙ) and a feedback loop for feeding back at least one bit (a₁,..., aₘ) of the output bits to one of the input bits (i₁,..., iₘ), and a control interface for receiving a set of memory values to be stored into the programmable memory device (112), whereby the set of values defines states and state transitions of the sequencer (11) reactive on the response signals (52) received from the DUT (2).

## Description

### BACKGROUND ART

The present invention relates to protocol testing.

Modern data processing systems are often built up of a plurality of individual components interconnected by means of one or more internal or external busses. The individual components can be, for example, central processing units (CPUs), memories, RAID subsystems, cache system, NIC cards, mass storage devices, etc. Various data protocols are used to transfer data between the components. Exemplary standards for data protocols for a data exchange on chip level are PCI (Peripheral Component Interconnect) and PCI Express developed by the PCI-SIG industry organization.

PCI Express architecture is a serial interconnect technology based on the existing PCI system that keeps pace with recent advances in processor and memory subsystems. The PCI Express architecture supports chip-to-chip, board-to-board and adapter solutions. PCI Express currently runs at 2.5Gbps per lane in each direction, providing a total bandwidth of 16GBps in a 32-lane configuration. Future frequency increases will scale up total bandwidth.

Protocol exercisers or traffic generators stimulate a device under test (DUT) with defined traffic scenarios, and help accelerate system validation. A protocol exerciser typically comprises a physical interface to the DUT, a sequencer for generating a sequence of states depending on internal or external events and for generating corresponding stimulus signals to be provided to the DUT. Protocol analyzers record data traffic between two devices in real-time and visualize trace information at a defined level of the data protocol, e.g. on the packet level of a data packed oriented protocol. Analyzing of the captured data, e.g. searching or filtering is typically realized in a post process after data capturing.

A test system known in the art is e.g. employed by the Agilent E2960 test series consisting of a serial protocol test platform for PCI Express, providing a full speed protocol analyzer and protocol exerciser.

### DISCLOSURE OF THE INVENTION

It is an object of the invention to provide an improved protocol testing. The object is solved by the independent claims. Preferred embodiments are shown by the dependent claims.

In modern interconnect technology as e.g. defined in the above-mentioned PCI Express standards, a communication link between devices require a physical link initialization. Therefore, e.g. PCI Express provides a link training after startup. For testing such link training, a test device might establish a link training state machine, which indicates different status states of the link during initialization. Depending on the data received from the DUT in response to the test data, a certain sequence of states is passed from an initial state. For example, the state machine might go to completion state, when the link is successfully established or to a reset state when a non-recoverable error has happened.

Testing a link initialization performance of a DUT might comprise testing a plurality of different scenarios requiring different link training state machines.

According to embodiments of the present invention, a test device is provided for link initialization behavior testing of a DUT. During initialization, the DUT receives and sends sequences of initialization data, also being referred to as training sequences, and performs corresponding initialization steps. In order to test the sequence of initialization steps performed within the DUT, the protocol tester comprises a programmable sequencer establishing a state machine that mirrors states of initialization within the DUT. Depending on the initialization data sent to the DUT and the response initialization data received from the DUT, the sequencer performs a certain sequence of states.

According to further embodiments, the sequencer comprises a programmable memory for storing a set of values that define the states of the state machines and conditions for state transitions between the states.

According to embodiments of the invention, it is possible to perform a plurality of different initialization tests without any need to implement new hardware logic. It is especially not necessary to download a binary file for configuring a field programmable array prior to running a test. Deploying a programmable sequencer allows for significantly reducing the turn-around time between tests during test execution, as variants of test scenarios can be provided by simply varying some data of the sequencer memory. As further advantage, the turn-around time while developing new tests or adopting behavior to new requirements, e.g. due to modified specifications, can be significantly reduced.

According to further embodiments, a result of a test run is analyzed in order to determine a further test to be performed, e.g. in a case whether the DUT has been found to behave incorrectly. Therefore, according to the desired behavior for the new test, a corresponding new set of data to be stored in the sequencer memory is generated.

The programmable memory might comprise a plurality of digital input ports and a plurality of digital output ports. The values present at the input ports might represent a memory address value. Each address value is mapped to one of the values stored in the memory. Depending on the address being present at the input, the mapping circuit provides at its output ports values representing a mapped output value.

A receive circuit comprised by the test device interprets the response data received from the DUT and generates a plurality of digital input values to be provided to a first part of input ports of the memory. Digital values of a first part of output ports are provided to a transmit circuit, that generates serial data to be provided to the DUT. Further, the sequencer comprises a feedback loop connecting a second part of output ports, over a delay circuit to a second part of input ports, in order to provide a partial feed back to the memory.

In a further embodiment, the plurality of digital input values is fed to a selector that dynamically selects a subset of bit values to be provided to a reduced number of input ports of the programmable memory. The dynamic selection might be carried out on the base of the feedback signals, e.g. taken at the output of the delay circuit.

In a further embodiment, the delay circuit comprises a plurality of delay flip flops that are periodically triggered in parallel by means of a trigger signal provided by a control clock in order to provide a certain delay to the feedback bit signals.

In a further embodiment, response initialization information received from the DUT is converted into a plurality of parallel bit data. This data is provided to a plurality of the digital input ports of the programmable memory.

In a further embodiment, the sequencer comprises a data interface for receiving a set of memory values to be stored into the programmable memory. The set of memory values might be downloaded from a control unit, e.g. an external personal computer connected to the test device by means of a fixed or temporal link. The control unit might have stored a plurality of different sets of memory values, whereby for each set the sequencer behaves as a certain state machine, so that different test cases can be evaluated.

The invention can be partly or entirely embodied or supported by one or more suitable software programs, which can be stored on or otherwise provided by any kind of data carrier, and which might be executed in or by any suitable data processing unit.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

Fig. 1 shows a block diagram of a test setup for testing the link initialization behavior of a DUT,

Fig. 2a shows a more detailed block diagram of a section of the test device communicating to the DUT,

Fig. 2b shows a variant of the test device of Fig. 2a,

Fig.3 shows a simple exemplary state diagram for initializing a communication link between the test device and the DUT, and

Fig. 4 shows an exemplary training sequence exchange between the DUT and the test device during the link initialization phase.

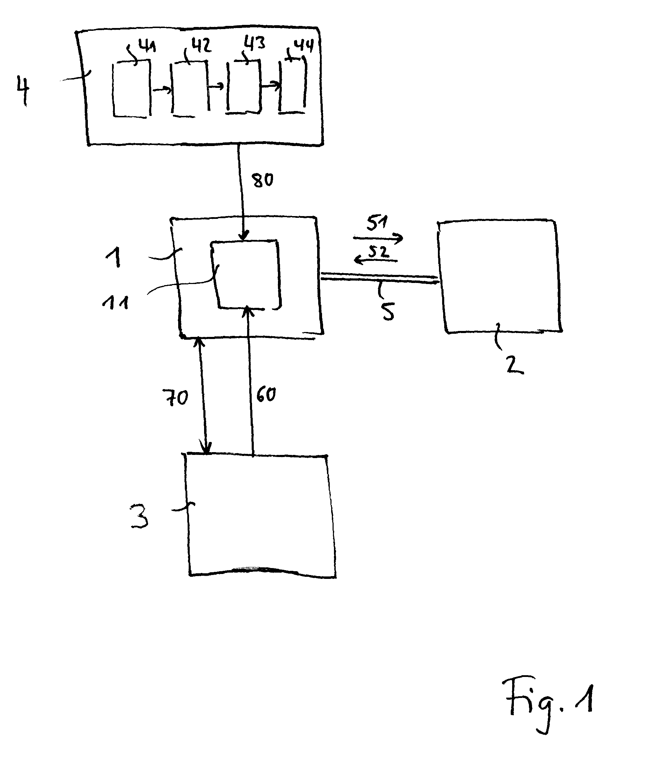

Fig. 1 shows a test setup comprising a test device 1, a DUT 2, a control unit 3 and a design unit 4. The test device 1 comprises a programmable circuit or array 11. The DUT 2 is connected to the test device by a link 5. Over the link 5, the test device transmits initialization data 51 to the DUT 2 and the DUT 2 transmits response data 52 back to the test device 1. The control unit 3 transmits state machine configuration data 60 to the test device 1. Further, the control unit 3 and the test device 1 exchange control signals 70. The design unit 4 serves for generating a chip design implementing a finite state machine -FSM- and for providing corresponding design data 80, also being referred to as binary file 80, to be transferred into the programmable array 11. Therefore, the design unit 4 comprises a hardware design tool chain for designing the hardware structure of the programmable array 11 in terms of components such as inputs, outputs, flip-flops, programmable memories, logic gates, multiplexers, demultiplexers, selectors, and their interaction with each other. The tool chain might comprise a design entry tool 41, a synthesizer 42, a place-and-route tool 43 and a binary file generator 44. The chip design might further comprise additional blocks or circuits besides the FSM, e.g. a circuit for transferring other kinds of PCI Express packets besides training sequences.

To define the behavior of the FSM, a hardware description language (HDL) might be used. Common description languages e.g. are VHDL or Verilog. In electronics, a hardware description language or HDL is a computer language for formal description of electronic circuits. An HDL source file is a text-based description of the spatial circuit structure and the temporal behavior of an electronic system. In contrast to a software programming language, the syntax and semantics of an HDL include notations for expressing time and concurrency within the hardware.

By means of the design entry tool 41, a sequencer source code is generated describing the hardware structure of the programmable array 11 in terms of hardware logic operations. The source code is provided to the synthesizer 42 that maps the hardware description to a netlist of basic logic elements. The place-and-route tool 43 transforms the netlist into a map determining the positions of the components in the design area, and routing or interconnecting the components. The developer might verify the map by performing simulations or timing analysis. Once the design and validation process is complete, the binary file generator 44 generates the binary file 80 for configuring the programmable array 11.

In a pretest stage before initial operation, e.g. upon power-on of the test device 2, the binary file 80 is loaded into the tester 1 in order to configure the hardware of the programmable array 11. The sequencer comprises a loadable memory circuit for temporarily storing the state machine configuration data 60.

In an embodiment, the programmable array 11 is realized as so-called field programmable gate array -FPGA-. An FPGA is a semiconductor device containing programmable logic components and programmable interconnects. The programmable logic components can be programmed to implement the functionality of basic logic gates, such as AND, OR, XOR, and NOT gates, or more complex combinational functions such as decoders or simple mathematical functions. These programmable logic components or logic blocks might also include memory elements, which may be simple flip-flops or more complete blocks of memories.

The control unit 3 controls the operation of the test device 1 by means of exchanging control signals 70. The control unit 3 might be an internal or an external computer. The control unit 3 might comprise a user interface for receiving commands from a user and displaying test result to the user. The user interface might be a graphical user interface presenting menu navigation.

Either automatically or on a command of the user, the control unit 3 downloads the state machine configuration data 60 to the test device 1. This data comprises a set of data values defining a state machine in terms of logical states and conditions for changing from one state to another.

Alternatively to providing a programmable array, any configurable electronics, e.g. an application-specific integrated circuit (ASIC) might be provided. As in contrast to an FPGA, the ASIC can only be configured once, the chip design implementing the FSM is e.g. performed in a manufacturing stage of the test device.

The control unit 3 might generate the state machine configuration data 60 on the base of user needs for a specific test. Alternatively, the control unit 3 might have stored different sets of machine configuration data 60 each representing a specific test. Further alternative, the state machine configuration data 60 might be generated on the base on an actual test result. Therefore, a test result, e.g. the sequence of states being passed during the test, is analyzed in order to determine a further test to be performed, e.g. in a case whether the DUT has been found to behave incorrectly. Therefore, a corresponding new set of configuration data 60 to be stored in the sequencer memory is generated and transferred into the memory.

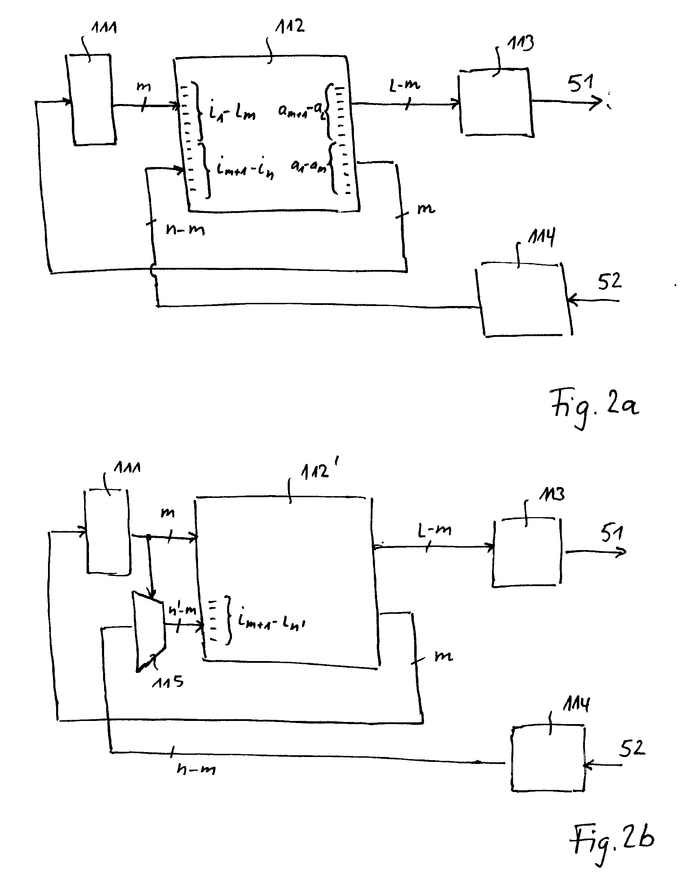

Fig. 2a shows a more detailed block diagram of a section of the test device 1. The test device comprises a state register 111, a memory device 112, a transmit unit 113 and a receive unit 114. The memory device comprises a plurality of digital input ports and a plurality of digital output ports. A first number m of digital output ports a₁ to aₘ are connected over the state register 111 to a corresponding first number m of digital input ports i₁ to iₘ. A second number m-l of digital output ports aₘ₊₁ to aₗ are connected to the transmit unit 113. A third number n-m of inputs ports iₘ₊₁ to in are connected to the receive unit 114.

The state register 111 might comprise a stage of parallel flip flops for synchronously delaying, on the base of a system clock, the digital signals of the digital output ports a₁ to aₘ, and for providing corresponding delayed signals to the input ports i₁ to iₘ. The clock signal might define the processing speed of the sequencer 11.

The transmit unit 113 generates, based on the plurality of digital transmit control data received from the output ports aₘ₊₁ to aₗ, a serial bit stream constituting the initialization data 51 to be sent to the DUT over the link 5.

The receive unit 114 interprets the response data 52 received as serial bit stream from the DUT and generates the plurality of digital input values to be provided to input ports iₘ₊₁ to in.

The output of the flip-flops might be called the current state of the FSM.

Fig. 2b shows a variant of Fig.2a further showing a selector 115. The selector 115 receives the current state of the FSM from the state register 111. The selector dynamically selects a subset of the digital response data received from receive unit114 to be provided to a reduced number n'-m of input ports iₘ₊₁ to iₙ, with respect to the number n-m of input ports iₘ₊₁ to iₙ, of the memory described under Fig. 2a. The dynamic selection has the advantage that the memory can be significantly reduced. Therewith, e.g. reducing the number of input ports by a number of 4 reduces the memory size to 1/16 of the size necessary for a test device without dynamic input selection.

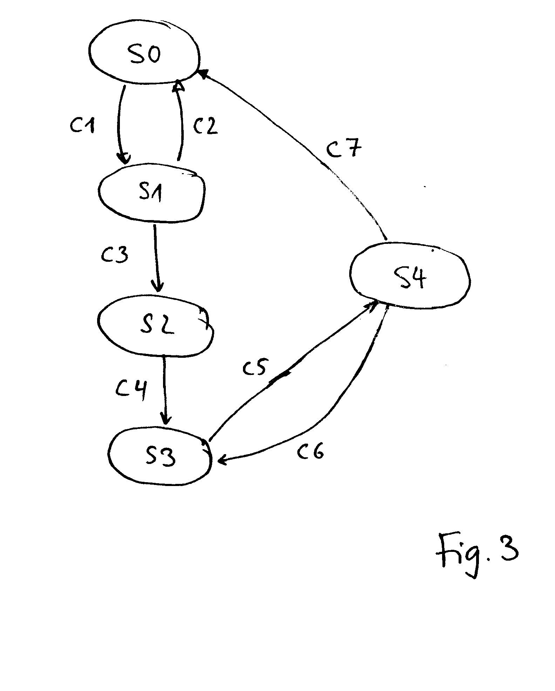

By way of example, Fig. 3 shows a simplified state machine to be implemented by the sequencer 11 described above. A state machine is a model of behavior composed of states, transitions and actions. A state stores information about the past, i.e. it reflects the input changes from the system start to the present moment. A transition indicates a state change and is described by a condition that would need to be fulfilled to enable the transition. An action is a description of an activity that is to be performed on a state entry, a state exit, a state transition or an input received in a certain state.

Depending on the set of memory data downloaded into the programmable memory 112, the sequencer 11 implements a specific Link Training and Status State Machine (LTSSM) for establishing the link to the DUT 2. Downloading a first set of data a first LTSSM with exemplary states S0 - S5 and state transition conditions c1 - c8 is established.

After power-on, this LTSSM starts in a *detect state* S0 detecting if the DUT 2 is present on the link. If the DUT 2 is found to be present on the link, the LTSSM a first state transition c1 is performed, moving to a *polling state* S1. Once a data transfer connection is established, the LTSSM performs a third state transition c3 to enter a *configuration state* S2. Otherwise the LTSSM performs a second state transition c2 back to the *detect state* S0. In the configuration state S2, the configuration of the link itself is negotiated between the two components. This negotiation might comprise a negotiation of link parameters comprising a link width (number of lanes). After having successfully completed the configuration, the LTSSM enters a *completion state* S3, also being referred to as L0 in the contest of PCI Express, by performing a fourth state transition c4, in order to start normal link operation. Further states are provided for further actions. The LTSSM might perform a fifth state transition c3 entering a *recovery state* S4, if the link has been disrupted e.g. due to an electrical disturbance. If the link is re-established, the LTSSM performs a sixth state transition c6 back to the *completion state* S3. If the link could not be re-established within a certain time frame, the LTSSM might perform a seventh state transition c7 to enter again the *detect state* S0.

The above described state machine shall serve as simple example. The above described states might each comprise a plurality of sub-states. Further a plurality of additional states might be provided. It will be well noted by anyone skilled in the art that state machines defined in the context of real busses, e.g. PCI or PCI Express, are much more complex that the example described above.

By subsequently downloading a second set of data, a second LTSSM might be established having (at least partly) different states and/or (at least partly) different state transition conditions. For example, the second LTSSM might comprise a different time constant causing the test device 1 remaining in a certain state for a longer time, in order to test a timeout mechanism in the DUT 2.

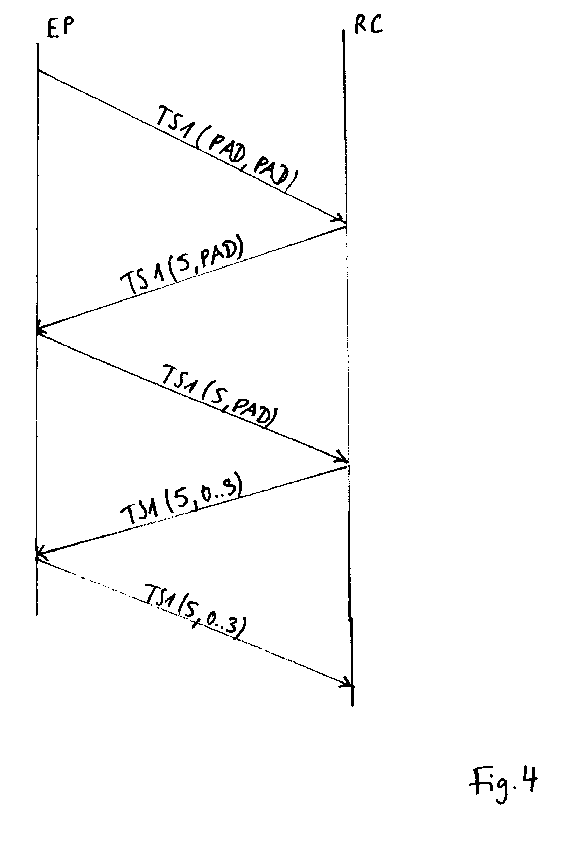

Fig. 4 shows exemplary training sequences exchanged between the DUT 2 and the test device 1 during link initialization. The first line EP might represent an end point in the context of PCI Express and the second point RC might represent a root complex in the context of PCI Express. By way of example, the end point EP might be the test device 1 and the root cause RC might be the DUT 2.

By transmitting a first control training signal TS1 with link and lane number equal to PAD, the test device 1 might request the DUT 2 to determine the link number of the link to be established. The DUT 2 might respond be transmitting a first response training sequence TS1 with link number equal to 5 and lane number equal to PAD, proposing link number 5. By transmitting a second control training sequence TS1 with link number equal to 5 and lane number equal to PAD being similar to the first response training sequence TS1 with link number equal to 5 and lane number equal to PAD, the test device 1 acknowledges the proposed link number. By transmitting a second response training sequence TS1 with link number equal to 5 and lane numbers equal to 0-3, the DUT 2 proposes to use lane numbers 0 -3 for the link to be established. By transmitting a corresponding third control training signal TS1 with link number equal to 5 and lane numbers equal to 0-3, the test device 1 acknowledges the proposed lane numbering. It should be noted that training sequences might be exchanged in most states of the LTSSM, including the detect state, polling state, configuration state and the recovery state as described above. Further training sequences might be repeatedly, until a certain response from the other device has been received.

## Claims

1. A test device (1) for testing a link initialization behavior of a device under test-DUT- (2), comprising:
a sequencer (11) for performing initialization steps in response to response signals (52) received from the DUT (2) in response to control signals (51) transmitted to the DUT (2), whereby the sequencer (11) comprises a programmable memory (112), and
a control interface for receiving a set of memory values to be stored into the programmable memory device (112), whereby the set of values defines states and state transitions of the sequencer (11) reactive on the response signals (52) received from the DUT (2).

2. The test device (1) of claim 1, wherein the programmable memory (112) comprises a feedback loop for providing a feedback of bit values of a first part of output ports (a₁,..., aₘ) to a corresponding part of input ports (i₁,..., iₘ) of the programmable memory (112)

3. The test device (1) of claim 1 or any one of the above claims, further comprising a receive circuit (113) adapted for generating a plurality of digital input values from the response signals (52) to be provided to a second set of memory input ports (iₘ₊₁,..., iₙ), and a transmit circuit (114) adapted for generating the control signals (51) by generating control signals (51) from a plurality of digital output values of a third plurality of memory output ports (aₘ₊₁,..., iₗ).

4. The test device (1) of claim 2, whereby the feedback loop comprises a delay circuit (111) adapted for providing each a delay to the bit values according to a system clock.

5. The test device (1) of claim 4, whereby the delay circuit (111) comprises a plurality of delay flip flops that are adapted to be periodically triggered in parallel by means of a trigger signal provided by the system clock in order to provide synchronous and unique delays.

6. The test device (1) of claim 1 or any one of the above claims, wherein the sequencer (11) is realized by means of a programmable gate array, further comprising a receiver for receiving a binary file (80) for establishing a structure of the programmable gate array in terms of hardware components and their interaction with each other.

7. The test device (1) of claim 3, further comprising a selector (115) for dynamically selecting a subset of the digital input values bit values to be provided to a fourth set of memory input ports (iₘ₊₁,..., iₙ).

8. The test device (1) of claim 1 or any one of the above claims, further comprising means for subsequently receiving different sets of memory values to be stored into the programmable memory device (112), for subsequently performing link initialization behavior tests with at least one of: different states and state transitions of the sequencer (11).

9. The test device (1) of claim 8, further comprising analyzing means for analyzing a previous initialization behavior and determining a new set of memory values for performing a new initialization behavior based on the previous initialization behavior.

10. The test device (1) of claim 1 or any one of the above claims, wherein the communication link (5) is realized as a PCI Express bus.

11. The test device (1) of claim 10, wherein the PCI Express bus is realized as a multi-lane bus.

12. A method of initializing a communication between a testing device (1) and a device under test -DUT- (2), whereby the test device (1) comprises a sequencer (11) for performing initialization steps in response to initialization response signals received from the DUT (2) (11) comprising:
receiving a set of data values (60) and storing this set of data values (60) into the programmable memory (112) to establish a link initialization state machine reactive on the response signals (52) received from the DUT (2), whereby the set of values defines states and state transitions of the sequencer (11).

13. The method of claim 12, further comprising receiving a binary file (80) describing a hardware structure of the sequencer (11) including a programmable memory (112).

14. A software program or product, preferably stored on a data carrier, for executing the method of the above method claims, when run on a data processing system such as a computer.
